(19) Europäisches Patentamt
European Patent Office
Office européen des brevets

(11) **EP 1 730 465 B1**

(12) **EUROPEAN PATENT SPECIFICATION**

(45) Date of publication and mention
of the grant of the patent:
**20.05.2015 Bulletin 2015/21**

(51) Int Cl.:
**G01B 5/008** *(2006.01)*    **G01B 21/04** *(2006.01)*
**G05B 19/401** *(2006.01)*

(21) Application number: **05718021.8**

(22) Date of filing: **11.03.2005**

(86) International application number:
**PCT/GB2005/000965**

(87) International publication number:
**WO 2005/090900 (29.09.2005 Gazette 2005/39)**

(54) **SCANNING AN OBJECT**

SCANNEN EINES OBJEKTS

PROCEDE POUR LE BALAYAGE D'UN OBJET

(84) Designated Contracting States:
**AT BE BG CH CY CZ DE DK EE ES FI FR GB GR
HU IE IS IT LI LT LU MC NL PL PT RO SE SI SK TR**

(30) Priority: **18.03.2004 GB 0406110**
**23.03.2004 GB 0406493**

(43) Date of publication of application:
**13.12.2006 Bulletin 2006/50**

(73) Proprietor: **Renishaw plc**
**Gloucestershire GL12 8JR (GB)**

(72) Inventors:
• **Powley, David Graham**
**Bristol,**
**South Gloucestershire BS35 3HZ (GB)**
• **Workman, Nigel Stephen**
**Bristol,**
**South Gloucestershire BS32 8ES (GB)**

(74) Representative: **Leland, Emma Clare et al**
**Renishaw plc**
**New Mills**
**Wotton-under-Edge**
**GB-Gloucestershire GL12 8JR (GB)**

(56) References cited:
**WO-A-03/038375    DE-A1- 19 809 589**

**Description**

The present invention relates to a method and apparatus for scanning an object using a surface measurement probe mounted on a coordinate positioning apparatus. Coordinate positioning apparatus includes, for example, coordinate measuring machines (CMM), machine tools, manual coordinate measuring arms, scanning machines and inspection robots.

The method and apparatus of the present invention is suitable for scanning teeth and dental parts.

It is known to measure an object by using a surface measurement probe mounted on a coordinate positioning apparatus, for example coordinate measuring machines. The measurement data of the surface of the object thus determined provides a 3D map of the surface of the object.

A first known method of scanning the surface of an object comprises moving the surface measurement probe along a single direction, for example the x axis, and following the surface of the object along that axis with the probe. This scan provides measurement data along a single plane. To obtain measurement data in the adjacent plane the surface measurement probe must be stopped and reversed to repeat the scan in the next plane and in successive planes, giving a raster scan over the whole surface. This method has the disadvantage that it is slow due to the requirement to stop and reverse the surface measurement probe at the end of each plane.

Another method for scanning the surface of an object comprises moving the surface measurement probe around the surface of the object in the xy plane and repeating the step for adjacent slices of the object translated in the z direction. This method is also slow. It has the further disadvantage that as the probe force is in the xy plane, then if the top surface is horizontal it cannot be measured using the same scan profile, as the probe will slip on the horizontal surface. To overcome this, a separate scan profile is required for the top surface

Our earlier International Patent Application No. WO03/046412 discloses a method of scanning a sample in which the sample is positioned on a mount which is provided with a generally helical screw-thread so that the mount and the sample rotate in a helical path. A probe is positioned at a suitable point on the surface of the sample so that on rotation of the mount, a spiral scan is produced of the sample.

This method is limited due to its mechanical nature as it requires a particular mechanical set-up and, for example, the thread pitch cannot be adjusted.

DE 19809589 and WO 03/038375 describe methods of calibrating a probe by moving it on a spiral path over the surface of a sphere of accurately known dimensions.

The present invention provides a method according to claim 1 for scanning an object having an unknown surface profile with a surface measurement probe mounted on a coordinate positioning machine, the probe having a definable servo direction vector, the method comprising the steps of:

using translational movement of the coordinate positioning machine to move the probe along an at least part nominally spiral path about an axis of said path arranged for intersection with the object;
servoing the probe in the direction of the servo direction vector by the coordinate positioning machine to control a stylus deflection or an offset of the probe relative to the unknown surface profile, wherein the servo direction vector is directed nominally towards the axis of the at least part nominally spiral path;
and wherein the servo direction vector for the probe is at an angle to said axis of the nominally spiral path and at an angle to a plane perpendicular to said axis of the at least part nominally spiral path.

As the servo direction vector of the probe is at an angle to both the axis of the nominally spiral path and the plane perpendicular to said axis, this enables scanning of surfaces both parallel and perpendicular to said axis, without the probe slipping off the surface of the object. This is particularly important for objects such as teeth in which information is required from both the tip and side surfaces. The servo direction vector is directed nominally towards the axis of the nominally spiral path to prevent probe slippage.

The object may have a free form surface.

This method has the advantage that the spiral profile provides a continuous and fast scan.

Furthermore, this method may be carried out on any coordinate positioning apparatus as no mechanical parts are required to form the spiral scan profile.

As the spiral scan profile is not defined by mechanical parts, the profile dimensions can easily be adjusted, such as pitch of spiral and angle of the second axis.

The surface measurement probe may comprise a contact probe having a deflectable stylus. In this case the method may comprise a further step of moving the probe parallel to the direction of the probe servo direction vector of the probe to control probe deflection.

The surface measurement probe may comprise a non contact probe. The method may comprise the further step of moving the probe parallel to the direction of the probe servo direction vector of the probe to control probe offset. As the non contact probe moves along the at least part nominal spiral path, it may be rotated to keep its line of sight directed towards the axis which intersects the object.

The method may comprise the step of maintaining the probe on the nominally spiral path by movement of the probe perpendicular to the direction of the servo direction vector of the probe.

In one embodiment, translational movement of the coordinate positioning machine to move the probe along said at least part nominally spiral path is achieved by: defining a second axis along which the probe servo direction vector is parallel, said second axis being at an angle to said axis of said path; rotating the second axis for an at least part revolution about said axis of said path and translating the second axis in a direction parallel to said axis of said path; moving the surface measurement probe to keep it on the second axis. The second axis may intersect the surface of the object to be measured.

The servo direction vector of the probe may be angled at 45 degrees to the axis intersecting the part.

The angle between the probe direction vector and the axis which intersects the object may be varied during the scan.

The surface measurement probe may comprise a noncontact probe, for example an optical, capacitance or inductance probe.

A second aspect of the present invention provides an apparatus according to claim 13 for scanning an object having an unknown surface profile comprising: a surface measurement probe mounted on a coordinate positioning machine, said coordinate positioning machine having drive means to enable the probe to be driven translationally in several axes; a controller which controls said drive means to move the probe along an at least part nominally spiral path, about an axis of said path which is for intersection with said object; wherein the controller controls the drive means such that the probe is servoed in the direction of a servo direction vector to control a stylus deflection or an offset of the probe relative to the unknown surface profile, the servo direction vector being directed nominally towards said axis of the at least part nominally spiral path; and wherein the controller controls the drive means such that the servo direction vector of the probe is at an angle to said axis of the at least part nominally spiral path and at an angle to a plane perpendicular to said axis of the at least part nominally spiral path.

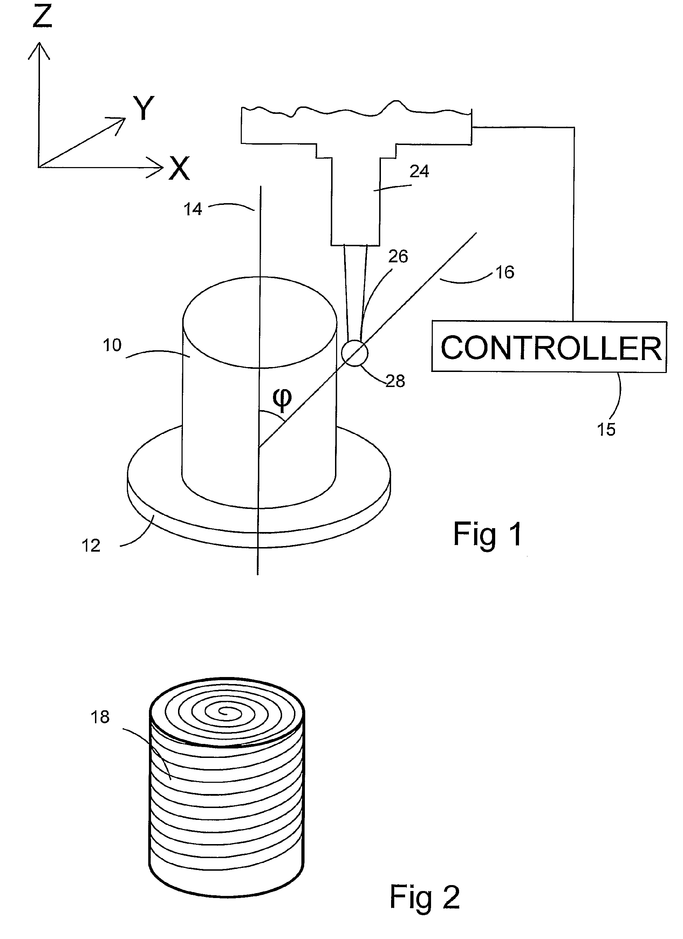

Preferred embodiments of the invention will now be described by way of example with reference to the accompanying drawings, wherein: Fig 1 is a perspective view of the object to be scanned;

Fig 2 illustrates the spiral scan profile; Fig 3 illustrates the scan profile for a series of half revolutions of the second axis; Fig 4 illustrates measurement of a surface having an undercut; and

Fig 5 illustrates a plan view of the scan profile.

As illustrated in Fig 1 an object 10, to be measured e.g. a tooth, is mounted 12 on a mount of the coordinate positioning apparatus. The coordinate positioning apparatus has drive means (not shown) which enable translational movement of a probe 24 mounted on it along the x,y and z axes. Such movement is controlled by a machine controller 15. An axis of rotation 14 is specified by the user. This may for example be the z axis of the part coordinate system of the object. The rotational axis 14 may be defined with respect to the mount 12 by the object 10 being mechanically aligned to this axis when mounted on the mount. A second axis 16 is defined which is at an angle $\varphi$ to the rotation axis 14 and which intersects the surface of the object 10. The second axis 16 may be at any angle to the rotation axis 14 (but not parallel) and Fig 1 shows the second axis being at 45°. The second axis 16 is rotated about the axis of rotation 14 and is translated parallel to the axis of rotation 14 thus creating a spiral profile.

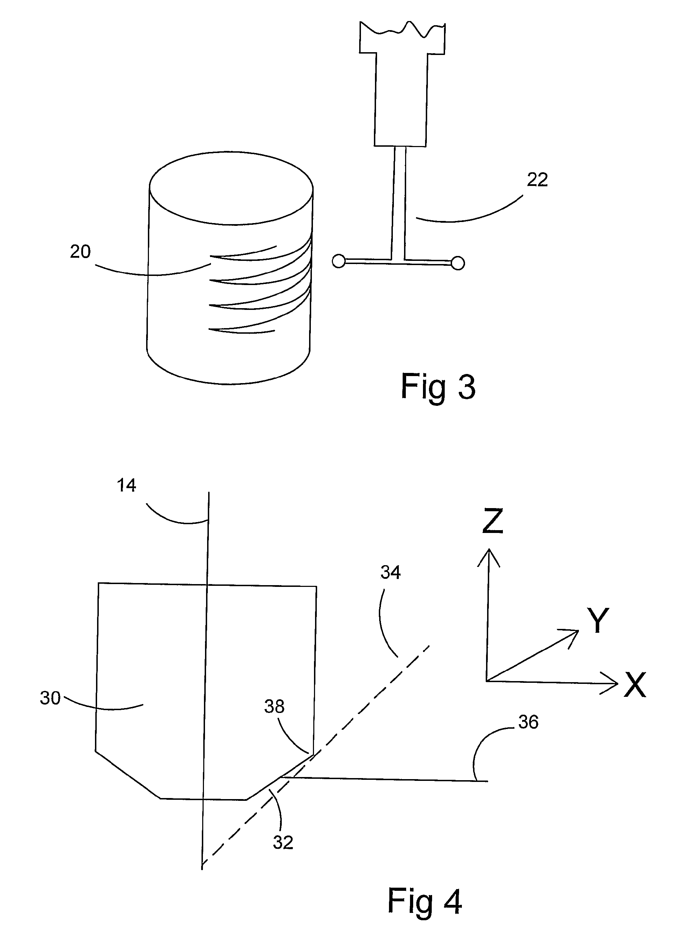

Fig 2 illustrates the spiral profile 18 created by this movement of the second axis about the axis of rotation. As described in more detail below, a probe is moved along the spiral profile created by the movement of the second axis to scan the object along this spiral profile. Fig 3 illustrates the scan profile 20 created when the second axis is rotated a part revolution about the axis of rotation and translated parallel to the axis of rotation. This scan profile is suitable for use with a probe having a T stylus 22 as illustrated.

A surface measurement probe 24 is mounted on the coordinate positioning apparatus for relative movement with respect to the mount 12. The probe 24 has a deflectable stylus 26 with a surface contacting tip 28.

The probe 24 follows the spiral profile created by movement of the second axis 16 and thus scans the object 10 by following a spiral profile.

The servo direction vector of the probe is directed along this second axis. This is the direction in which the probe is servoed by the coordinate positioning apparatus to control the stylus deflection of the probe (or for a non-contact probe, to control the offset of the probe.)

Movement of the probe is controlled by an algorithm having two components. The first component keeps the probe on the second axis. This is accomplished by determining the position of the stylus tip of the probe, determining the nearest position on the second axis to the stylus tip and moving the probe in a direction perpendicular to the second axis back onto the second axis.

The second component of the algorithm controls the probe deflection. In this case the probe is moved parallel to the second axis to provide the desired probe deflection.

Both of the algorithm components are calculated as position demands.

In the present example, the second axis has an angle of 45°. This is convenient for most applications because it will intersect with both the side and top surfaces, it enables both of these surfaces to be scanned in a single scan. This is particularly important where measurement of the top surface is important, for example for teeth. For measurements of surfaces both parallel and perpendicular to the rotational axis 14, the second axis must be at an angle to the rotational axis and to the plane perpendicular to that axis.

An advantage of this method is that the angle of the second axis may be varied. Fig 4 illustrates an object 30 having an undercut 32. In the embodiment above the second axis was angled at 45° to the axis of rotation (shown by dashed line 34). This allows measurement of an undercut at an angle of 45° or below. An undercut having an angle of greater than 45° is not intersected by the second axis angled at 45° and thus cannot be scanned using this profile. However if the angle of the second axis is changed, for example to 90° to the axis of rotation, this new second axis 36 now intersects the undercut which can be scanned using the spiral profile. The angle of the second axis can be changed during the scan. Thus objects with sharp undercuts can still be scanned in a single scan profile which has the advantage of enabling a fast scan. This is particularly relevant for scanning objects such as teeth which have undercuts.

The angle of the second axis may be changed automatically using stylus deflection data to determine when to change the angle. For example, referring to fig 4, the object 30 may be scanned upwards from at or near the bottom of the object using a horizontal second axis 36. When the stylus tip reaches the corner 38 of the undercut 32, the stylus will be deflected in -Z and the angle of the second axis will in response change automatically to 45°. Alternatively, the angle of the second axis may be changed at a predetermined position in Z.

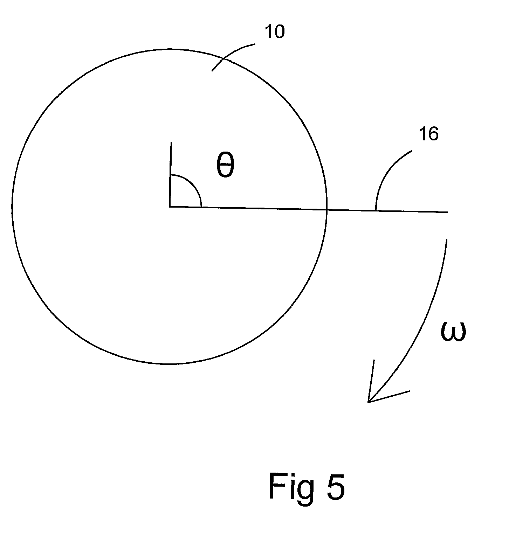

The algorithms used to control the position of the probe will now be described with reference to Fig 5.

In a first step the rotation angle demand for the next frame is calculated. (This can exceed 2n.)

$$\theta = \Omega T$$

where $\theta$ is the rotation angle of the second axis $\Omega$ is the rotational velocity of the second axis and T equals time.

In a next step, the rotation matrix is created:

$$\texttt{Rotation:=} \begin{pmatrix} \cos(\theta) & -\sin(\theta) & 0 \\ \sin(\theta) & \cos(\theta) & 0 \\ 0 & 0 & 1 \end{pmatrix}$$

Where "Rotation" is the rotation matrix.

In a next step the sensor axis direction is calculated:

$$\texttt{Direction: = Rotation} \begin{bmatrix} \frac{1}{\sqrt{2}} \\ 0 \\ \frac{1}{\sqrt{2}} \end{bmatrix}$$

Where "Direction" is the sensor axis direction.

The origin translation in z due to the thread pitch is then calculated.

$$\texttt{Origin: =} \begin{bmatrix} 0 \\ 0 \\ \frac{\theta}{2.\pi}.\text{Pitch} \end{bmatrix}$$

Where "Origin" is the origin translation in z and "Pitch" is the thread pitch.

Next the scan position demand is calculated. This is the nearest point on the second axis to the current machine position, where "machine" is the position of the centre of the stylus ball when there is no deflection.

```
ScanPositionDemand:= [(Machine - Origin).Direction].
Direction + Origin
```

The probe deflection error is calculated from:

$$\text{Deflection error:= } |\text{Probe deflection}| - \text{Nominal deflection}$$

Where "Probe deflection" is the actual probe deflection and "Nominal deflection" is the desired probe deflection.

The probe deflection error is used to calculate the deflection control vector:

ProbePositionDemand:= DefError.Direction

Where "DefError" is the probe deflection error and "direction" is the direction parallel to the second axis along which the probe is moved.

The position demand vector can thus be determined from the deflection control vector and the scan position demand vector:

$$\text{PositionDemand:= ScanPositionDemand + ProbePositionDemand}$$

The velocity demand can thus be created:

$$\text{VelocityDemand:= } \frac{PositionDemand - \text{Machine}}{\delta t}$$

Although the above description describes the use of a contact probe, the method is also suitable using a non-contact probe e.g. an optical, capacitance or inductance probe. If a 1-D non-contact probe is used, the probe will need to be rotated to keep it directed at the surface of the object as the probe follows the spiral profile for example it may be directed towards the rotational axis of the spiral path. However using this method, the direction in which the probe must face is known. Offset of the non-contact probe may be adjusted by moving the probe parallel to the second axis in a similar manner to how probe deflection is adjusted for a contact probe.

**Claims**

1. A method for scanning an object having an unknown surface profile with a surface measurement probe mounted on a coordinate positioning machine, the probe having a definable servo direction vector, the method comprising the steps of:

   using translational movement of the coordinate positioning machine to move the probe along an at least part nominally spiral path, about an axis of said path, said axis being arranged for intersection with the object;
   servoing the probe in the direction of the servo direction vector by the coordinate positioning machine to control a stylus deflection or an offset of the probe relative to the unknown surface profile, wherein the servo direction vector is directed nominally towards the axis of the at least part nominally spiral path;
   and wherein the servo direction vector for the probe is at an angle to said axis of the nominally spiral path and at an angle to a plane perpendicular to said axis of the at least part nominally spiral path.

2. A method according to claim 1 wherein the object has a free form surface.

3. A method according to claim 1 or claim 2 wherein the surface measurement probe comprises a contact probe having a deflectable stylus.

4. A method according to claim 3 wherein the method comprises a further step of moving the probe parallel to the direction of the probe servo direction vector of the probe to control probe deflection.

5. A method according to claim 1 or claim 2 wherein the surface measurement probe comprises a non contact probe.

**6.** A method according to claim 5 wherein the method comprises a further step of moving the probe parallel to the direction of the probe servo direction vector of the probe to control probe offset.

**7.** A method according to claim 5 or claim 6 wherein as the probe moves along the at least part nominal spiral path, it is rotated to keep its line of sight directed towards the axis which intersects the object.

**8.** A method according to any preceding claim wherein the method includes the step of maintaining the probe on the nominally spiral path by movement of the probe perpendicular to the direction of the servo direction vector of the probe.

**9.** A method according to any preceding claim wherein translational movement of the coordinate positioning machine to move the probe along said at least part nominally spiral path is achieved by:

defining a second axis along which the probe servo direction vector is parallel, said second axis being at an angle to said axis of said path;
rotating the second axis for an at least part revolution about said axis of said path and translating the second axis in a direction parallel to said axis of said path;
moving the surface measurement probe to keep it on the second axis.

**10.** A method according to claim 9 wherein the second axis intersects the surface of the object to be measured.

**11.** A method according to any preceding claim, wherein the servo direction vector of the probe is angled at 45 degrees to the axis intersecting the part.

**12.** A method according to any preceding claim, wherein the angle between the probe direction vector and the axis which intersects the object is varied during the scan.

**13.** Apparatus for scanning an object having an unknown surface profile comprising:

a surface measurement probe mounted on a coordinate positioning machine, said coordinate positioning machine having drive means to enable the probe to be driven translationally in several axes;
a controller which is arranged to control said drive means to move the probe along an at least part nominally spiral path, about an axis of said path, said axis being for intersection with said object;
wherein the controller is arranged to control the drive means such that the probe is servoed in the direction of a servo direction vector to control a stylus deflection or an offset of the probe relative to the unknown surface profile, the servo direction vector being directed nominally towards said axis of the at least part nominally spiral path;
and wherein the controller is arranged to control the drive means such that the servo direction vector of the probe is at an angle to said axis of the at least part nominally spiral path and at an angle to a plane perpendicular to said axis of the at least part nominally spiral path.

**14.** Apparatus for scanning an object according to claim 13 wherein the controller controls the drive means to maintain the probe on the nominally spiral path by movement of the probe perpendicular to the direction of the servo direction vector of the probe.

**15.** Apparatus for scanning an object according to claim 13 or claim 14, wherein translational movement of the coordinate positioning machine to move the probe along said at least part nominally spiral path is achieved by:

defining a second axis along which the probe servo direction vector is parallel, said second axis being at an angle to said axis of said path;
rotating the second axis for an at least part revolution about said axis of said path and translating the second axis in a direction parallel to said axis of said path;
moving the surface measurement probe to keep it on the second axis.

**Patentansprüche**

**1.** Verfahren zum Abtasten eines Objekts, das ein unbekanntes Oberflächenprofil aufweist, mit einem Oberflächenmesstaster, der an einer Koordinatenpositionierungsmaschine montiert ist, wobei der Taster einen definierbaren Servorichtungsvektor besitzt, wobei das Verfahren die Schritte umfasst, dass:

eine Translationsbewegung der Koordinatenpositionierungsmaschine verwendet wird, um den Taster entlang eines zumindest teilweise nominell spiralförmigen Pfades um eine Achse des Pfades zu bewegen, wobei die Achse zur Überschneidung mit dem Objekt angeordnet ist;
den Taster in der Richtung des Servorichtungsvektors durch die Koordinatenpositionierungsmaschine servozusteuern, um eine Taststiftauslenkung oder einen Versatz des Tasters relativ zu dem unbekannten Oberflächenprofil zu steuern, wobei der Servorichtungsvektor nominell zu der Achse des zumindest teilweise nominell spiralförmigen Pfades gerichtet ist;
und wobei der Servorichtungsvektor für den Taster unter einem Winkel zu der Achse des nominell spiralförmigen Pfades und unter einem Winkel zu einer Ebene rechtwinklig zu der Achse des zumindest teilweise nominell spiralförmigen Pfades liegt.

2. Verfahren nach Anspruch 1, wobei das Objekt eine Oberfläche mit freier Form besitzt.

3. Verfahren nach einem der Ansprüche 1 oder 2, wobei der Oberflächenmesstaster einen Kontakttaster umfasst, der einen auslenkbaren Taststift besitzt.

4. Verfahren nach Anspruch 3, wobei das Verfahren einen weiteren Schritt zum Bewegen des Tasters parallel zu der Richtung des Tasterservorichtungsvektors des Tasters umfasst, um die Tasterauslenkung zu steuern.

5. Verfahren nach einem der Ansprüche 1 oder 2, wobei der Oberflächenmesstaster einen berührungslosen Taster umfasst.

6. Verfahren nach Anspruch 5, wobei das Verfahren einen weiteren Schritt zum Bewegen des Tasters parallel zu der Richtung des Tasterservorichtungsvektors des Tasters umfasst, um einen Tasterversatz zu steuern.

7. Verfahren nach einem der Ansprüche 5 oder 6, wobei, wenn sich der Taster entlang des zumindest teilweise nominell spiralförmigen Pfades bewegt, dieser gedreht wird, um seine Sichtlinie so zu halten, dass sie zu der Achse, die das Objekt überschneidet, gerichtet ist.

8. Verfahren nach einem der vorhergehenden Ansprüche, wobei das Verfahren den Schritt zum Beibehalten des Tasters an dem nominell spiralförmigen Pfad durch Bewegen des Tasters rechtwinklig zu der Richtung des Servorichtungsvektors des Tasters umfasst.

9. Verfahren nach einem der vorhergehenden Ansprüche, wobei eine Translationsbewegung der Koordinatenpositionierungsmaschine zur Bewegung des Tasters entlang des zumindest teilweise nominell spiralförmigen Pfades erreicht wird durch:

Definieren einer zweiten Achse, entlang der der Tasterservorichtungsvektor parallel ist, wobei die zweite Achse unter einem Winkel zu der Achse des Pfades liegt;
Drehen der zweiten Achse für eine zumindest Teilumdrehung um die Achse des Pfades und Verschieben der zweiten Achse in einer Richtung parallel zu der Achse des Pfades;
Bewegen des Oberflächenmesstasters, um diesen an der zweiten Achse zu halten.

10. Verfahren nach Anspruch 9, wobei die zweite Achse die Oberfläche des zu messenden Objektes überschneidet.

11. Verfahren nach einem der vorhergehenden Ansprüche, wobei der Servorichtungsvektor des Tasters unter 45 Grad zu der das Teil überschneidenden Achse angewinkelt ist.

12. Verfahren nach einem der vorhergehenden Ansprüche, wobei der Winkel zwischen dem Tasterrichtungsvektor und der Achse, die das Objekt überschneidet, während der Abtastung variiert wird.

13. Vorrichtung zum Abtasten eines Objekts, das ein unbekanntes Oberflächenprofil besitzt, umfassend:

einen Oberflächenmesstaster, der an einer Koordinatenpositionierungsmaschine montiert ist, wobei die Koordinatenpositionierungsmaschine ein Antriebsmittel aufweist, um zu ermöglichen, dass der Taster verschiebbar in mehreren Achsen angetrieben werden kann;

einen Controller, der derart angeordnet ist, das Antriebsmittel so zu steuern, dass der Taster entlang eines zumindest teilweise nominell spiralförmigen Pfades um eine Achse des Pfades bewegt wird, wobei die Achse zur Überschneidung mit dem Objekt dient;

wobei der Controller derart angeordnet ist, das Antriebsmittel so zu steuern, dass der Taster in der Richtung eines Servorichtungsvektors servogesteuert wird, um eine Taststiftauslenkung oder einen Versatz des Tasters relativ zu dem unbekannten Oberflächenprofil zu steuern, wobei der Servorichtungsvektor nominell zu der Achse des zumindest teilweise nominell spiralförmigen Pfades gerichtet ist;

und wobei der Controller derart angeordnet ist, das Antriebsmittel so zu steuern, dass der Servorichtungsvektor des Tasters unter einem Winkel zu der Achse des zumindest teilweise nominell spiralförmigen Pfades und unter einem Winkel zu einer Ebene rechtwinklig zu der Achse des zumindest teilweise nominell spiralförmigen Pfades liegt.

**14.** Vorrichtung zum Abtasten eines Objektes nach Anspruch 13, wobei der Controller das Antriebsmittel zur Beibehaltung des Tasters an dem nominell spiralförmigen Pfad durch Bewegen des Tasters rechtwinklig zu der Richtung des Servorichtungsvektors des Tasters steuert.

**15.** Vorrichtung zum Abtasten eines Objekts nach Anspruch 13 oder Anspruch 14, wobei eine Translationsbewegung der Koordinatenpositionierungsmaschine zur Bewegung des Tasters entlang des zumindest teilweise nominell spiralförmigen Pfades erreicht wird durch:

Definieren einer zweiten Achse, entlang der der Tasterservorichtungsvektor parallel ist, wobei die zweite Achse unter einem Winkel zu der Achse des Pfades liegt;

Drehen der zweiten Achse für eine zumindest Teilumdrehung um die Achse des Pfades und Verschieben der zweiten Achse in einer Richtung parallel zu der Achse des Pfades;

Bewegen des Oberflächenmesstasters, um diesen an der zweiten Achse zu halten.

## Revendications

**1.** Une méthode pour scanner un objet dont le profil de surface est inconnu avec un palpeur de mesure de surface monté sur une machine de positionnement tridimensionnel, le palpeur ayant un vecteur de servo-direction définissable, la méthode comprenant les étapes suivantes ;

l'utilisation d'un mouvement de translation de la machine de positionnement tridimensionnel afin de déplacer le palpeur le long d'une trajectoire au moins en partie nominalement spirale, tournant autour d'un axe de ladite trajectoire, ledit axe étant disposé pour l'intersection avec l'objet ;

l'asservissement du palpeur dans la direction du vecteur de servo-direction par la machine de positionnement tridimensionnel afin de contrôler une déflexion du stylet ou un décalage du palpeur par rapport au profil de surface inconnu, dans lequel le vecteur de servo-direction est nominalement dirigé vers l'axe de la trajectoire au moins en partie nominalement spirale ;

et dans lequel le vecteur de servo-direction pour le palpeur est à un angle par rapport audit axe de la trajectoire nominalement spirale et à un angle par rapport au plan perpendiculaire audit axe de la trajectoire au moins en partie nominalement spirale.

**2.** Une méthode selon la revendication 1 dans laquelle l'objet a une surface de forme libre.

**3.** Une méthode selon la revendication 1 ou la revendication 2 dans laquelle le palpeur de mesure de surface comprend un palpeur par contact muni d'un stylet capable d'être défléchi.

**4.** Une méthode selon la revendication 3 dans laquelle la méthode comprend une étape supplémentaire comportant le déplacement du palpeur parallèlement à la direction du vecteur de servo-direction du palpeur afin de contrôler la déflexion du palpeur.

**5.** Une méthode selon la revendication 1 ou la revendication 2 dans laquelle le palpeur de mesure de surface comprend un palpeur sans contact.

**6.** Une méthode selon la revendication 5 dans laquelle la méthode comprend une étape supplémentaire comportant le déplacement du palpeur parallèlement à la direction du vecteur de servo-direction du palpeur afin de contrôler le décalage du palpeur.

**7.** Une méthode selon la revendication 5 ou la revendication 6 dans laquelle, lorsque le palpeur se déplace le long de la trajectoire au moins en partie nominalement spirale, il pivote pour maintenir sa ligne de vue dirigée vers l'axe en intersection avec l'objet.

**8.** Une méthode selon l'une quelconque des revendications précédentes selon laquelle la méthode comprend l'étape de maintien du palpeur sur la trajectoire nominalement spirale par un déplacement du palpeur perpendiculairement à la direction du vecteur de servo-direction du palpeur.

**9.** Une méthode selon l'une quelconque des revendications précédentes selon laquelle le mouvement de translation de la machine de positionnement tridimensionnel afin de déplacer le palpeur le long de ladite trajectoire au moins en partie nominalement spirale est obtenu par :

la définition d'un deuxième axe le long duquel le vecteur de servo-direction du palpeur est parallèle, ledit deuxième axe étant à un angle par rapport audit axe de ladite trajectoire ;
la rotation du deuxième axe pour une révolution au moins partielle autour dudit axe de ladite trajectoire et la translation du deuxième axe dans une direction parallèle audit axe de ladite trajectoire ;
le déplacement du palpeur de mesure de surface pour le maintenir sur le deuxième axe.

**10.** Une méthode selon la revendication 9 dans laquelle le deuxième axe intersecte la surface de l'objet à mesurer.

**11.** Une méthode selon l'une quelconque des revendications précédentes dans laquelle le vecteur de servo-direction du palpeur est à un angle de 45 degrés par rapport à l'axe en intersection avec la pièce.

**12.** Une méthode selon l'une quelconque des revendications précédentes dans laquelle l'angle formé par le vecteur de direction du palpeur et l'axe en intersection avec l'objet est varié pendant le scanning.

**13.** Appareil de scanning d'un objet ayant un profil de surface inconnu comprenant :

un palpeur de mesure de surface monté sur une machine de positionnement tridimensionnel, ladite machine de positionnement tridimensionnel ayant un moyen d'entraînement permettant de piloter le palpeur selon un mouvement de translation sur plusieurs axes ; un contrôleur qui est disposé afin de contrôler ledit moyen d'entraînement permettant de déplacer le palpeur le long d'une trajectoire au moins en partie nominalement spirale, autour d'un axe de ladite trajectoire, ledit axe étant en intersection avec ledit objet ;
dans lequel le contrôleur est disposé afin de contrôler le moyen d'entraînement de telle sorte que le palpeur est asservi dans la direction d'un vecteur de servo-direction pour contrôler la déflexion d'un stylet ou le décalage du palpeur par rapport au profil de surface inconnu, le vecteur de servo-direction étant dirigé nominalement vers ledit axe de la trajectoire au moins en partie nominalement spirale ;
et dans lequel le contrôleur est disposé afin de contrôler le moyen d'entraînement de telle sorte que le vecteur de servo-direction du palpeur se trouve à un angle par rapport audit axe de la trajectoire au moins en partie nominalement spirale et à un angle par rapport à un plan perpendiculaire audit axe de la trajectoire au moins en partie nominalement spirale.

**14.** Appareil de scanning d'un objet selon la revendication 13 dans lequel le contrôleur contrôle le moyen d'entraînement afin de maintenir le palpeur sur la trajectoire au moins en partie nominalement spirale par le déplacement du palpeur perpendiculairement à la direction du vecteur de servo-direction du palpeur.

**15.** Appareil de scanning d'un objet selon la revendication 13 ou la revendication 14, dans lequel le mouvement de translation de la machine de positionnement tridimensionnel pour déplacer le palpeur le long de ladite trajectoire au moins en partie nominalement spirale est obtenu par :

la définition d'un deuxième axe le long duquel le vecteur de servo-direction du palpeur est parallèle, ledit deuxième axe étant à un angle par rapport audit axe de ladite trajectoire ;
la rotation du deuxième axe pour une révolution au moins partielle autour dudit axe de ladite trajectoire et la translation du deuxième axe dans une direction parallèle audit axe de ladite trajectoire ;
le déplacement du palpeur de mesure de surface pour le maintenir sur le deuxième axe.

Fig 1

Fig 2

Fig 3

Fig 4

Fig 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03046412 A
- DE 19809589

- WO 03038375 A